Europäisches Patentamt

European Patent Office

Office européen des brevets

(11) Publication number: **0 089 734 B1**

## EUROPEAN PATENT SPECIFICATION

(45) Date of publication of patent specification: **08.04.92**

(51) Int. Cl.5: **G11B 7/013**, G11B 27/30, G11B 7/007, G11B 7/08, G11B 7/095

(21) Application number: **83300345.2**

(22) Date of filing: **24.01.83**

(54) **Disk-shaped record carrier.**

(30) Priority: **19.03.82 US 359642**

(43) Date of publication of application:
**28.09.83 Bulletin 83/39**

(45) Publication of the grant of the patent:
**08.04.92 Bulletin 92/15**

(84) Designated Contracting States:
**DE FR GB NL**

(56) References cited:
EP-A- 0 021 411     FR-A- 2 312 091
FR-A- 2 441 236     FR-A- 2 508 218
FR-A- 2 517 103     GB-A- 2 016 744
US-A- 3 795 902

PATENTS ABSTRACTS OF JAPAN, vol. 5, no.
73 (P-61) [745], 15th May 1981; & JP - A - 56
22 227 (TOKYO SHIBAURA DENKI K.K.)
02-03-1981

PATENTS ABSTRACTS OF JAPAN, vol. 4, no.
168 (P-37) [650], 20th November 1980; & JP -
A - 55 113 197 (HITACHI SEISAKUSHO K.K.)
01-09-1980

PATENTS ABSTRACTS OF JAPAN, vol. 7, no.
26 (P-172) [1171], 2nd Febuary 1983; & JP - A
- 57 181 429 (TOKYO SHIBAURA DENKI K.K.)
08-11-1982

(73) Proprietor: **CONTROL DATA CORPORATION**
**8100-34th Avenue South**
**Minneapolis Minnesota 55440(US)**

(72) Inventor: **Stanis, William Joseph**
**6392 Pulpit Park Drive**
**Colorado Springs Colorado 80907(US)**
Inventor: **Silvy, Dorrel Robert**
**4821 Harvest Court**
**Colorado Springs Colorado 80917(US)**

(74) Representative: **Groenendaal, Antonius Wilhelmus Maria et al**
**Internationaal Octrooibureau B.V. Prof. Holstlaan 6**
**NL-5656 AA Eindhoven(NL)**

## Description

This invention relates to disk shaped record carriers for optical recording systems.

US-A-4,238,843 discloses a disk shaped optical record carrier having spiral information tracks where a plurality of sectors are each divided into a data or information section and a synchronising section. Each synchronising section has a prerecroded indicator portion and an address portion. The indicator portions are used to identify the beginning of the sector and also the address portion of the sector. The indicator portion has information recorded thereon so that the signal produced has a frequency domain which is clearly distinguisable from any information component resulting in the address portion or the data portion of the record carrier.

EP-A-0,021,411 discloses a disk shaped record carrier for an optical recording system, having a plurality of information tracks, each track having a plurality of pre-formatted optically detectable marks, the marks being in a pair of parallel and spaced apart lines. The pre-formatted marks are in the form of pits and are so arranged and recorded that they act as guide pits in recording and reproducing information so as to produce a wobble in the rotating or circumferential direction which amounts to the space between the parallel lines. The carrier is used to record information at locations or pits lying along the spaced apart lines of guide pits. An exactly similar wobble is applied to the reading mechanism in order to follow the side stepping information track.

According to the present invention, there is provided a disc shaped record carrier for an optical recording system, having a plurality of information tracks having radially aligned clock synchronisation areas comprising marks, said clock synchronisation areas alternating with data areas, the tracks being provided with prerecorded information patterns arranged along a track centre line, characterized in that the synchronisation areas comprise offset marks having a first radial offset to one side of the track centre line or a second radial offset to the other side of the track centre line, offset marks with the first offset are alternating with offset marks with the second offset along the track centre line.

By the invention, a reading mechanism of the optical recording system traversing tracks radially while the carrier is rotating will read a signal indicative of track crossing information as a result of the pattern of off-set marks. Also tracking information for tracking servo and track addressing may be obtained on the basis of the offset marks.

A plurality of the offset marks off-set one side may be followed by a plurality of the offset marks off-set to the other side.

How the invention can be carried into effect is herein-after described, by way of example, and with reference to the accompanying drawings, in which:-

Figure 1 is a top plan view of a disk shaped record carrier for an optical recording system, to which the present invention is applicable;

Figure 2 illustrates pre-formatted offset marks or clock locations on a record carrier such as that in Figure 1, to assist explanation of the present invention;

Figure 3 shows a possible modulation code for the record carrier of Figures 1 and 2;

Figure 4 illustrates the recording of information in tracks on a carrier according to the present invention and the derivation of track crossing information therefrom; and

Figure 5 shows a track crossing information signal of a record carrier according to the present invention.

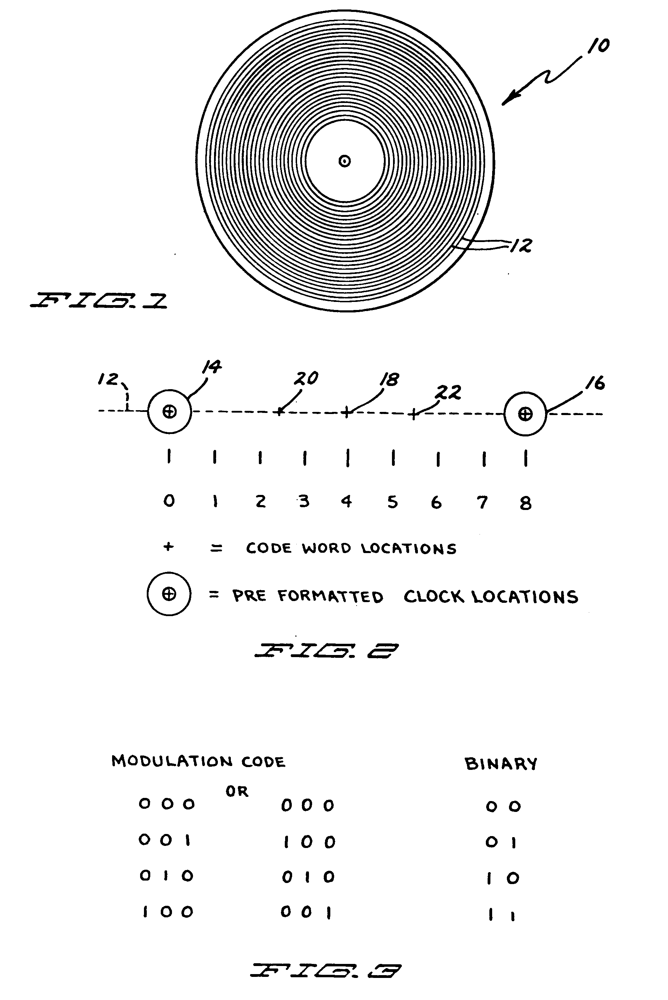

Referring now to Figure 1, a disk shaped record carrier 10 according to the present invention is provided with a plurality of concentric information tracks 12. These information tracks 12 are preformatted so that a disk containing pre-formatted clock information in the form of optically detectable offset marks may be provided as a "blank" for an optical recording system in which both writing and reading will occur. In addition, the clock information may be used in a pre-formatted pre-written record carrier for use with an optical recording system in which only reading may occur. The use of concentric information tracks 12 is particularly suitable for an optical recording system in which it is desired to access randomly particular information bits as is customary in a data handling system, for example.

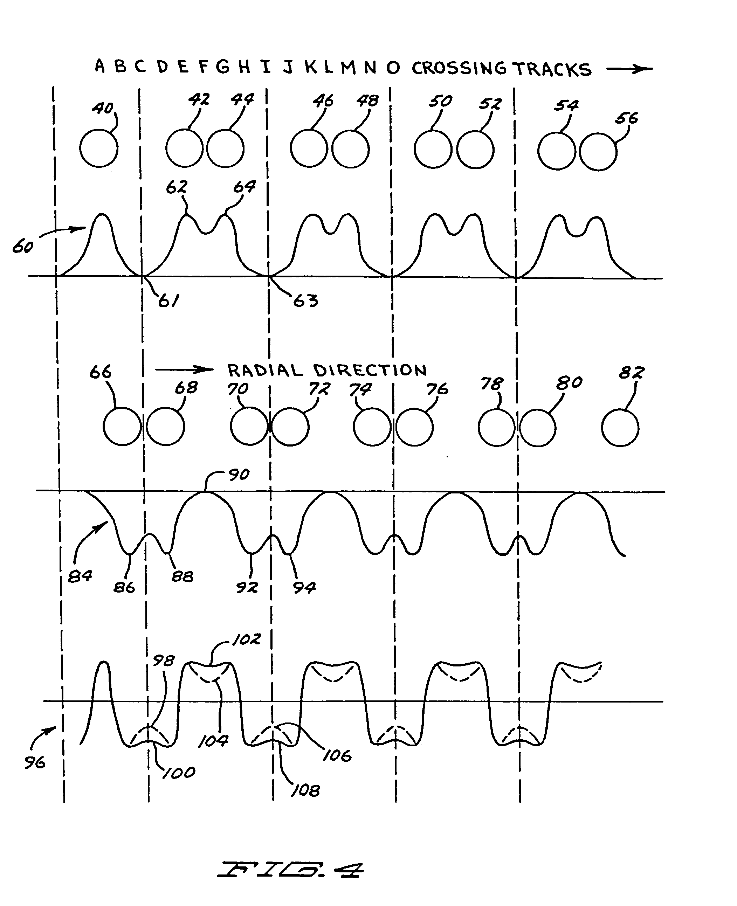

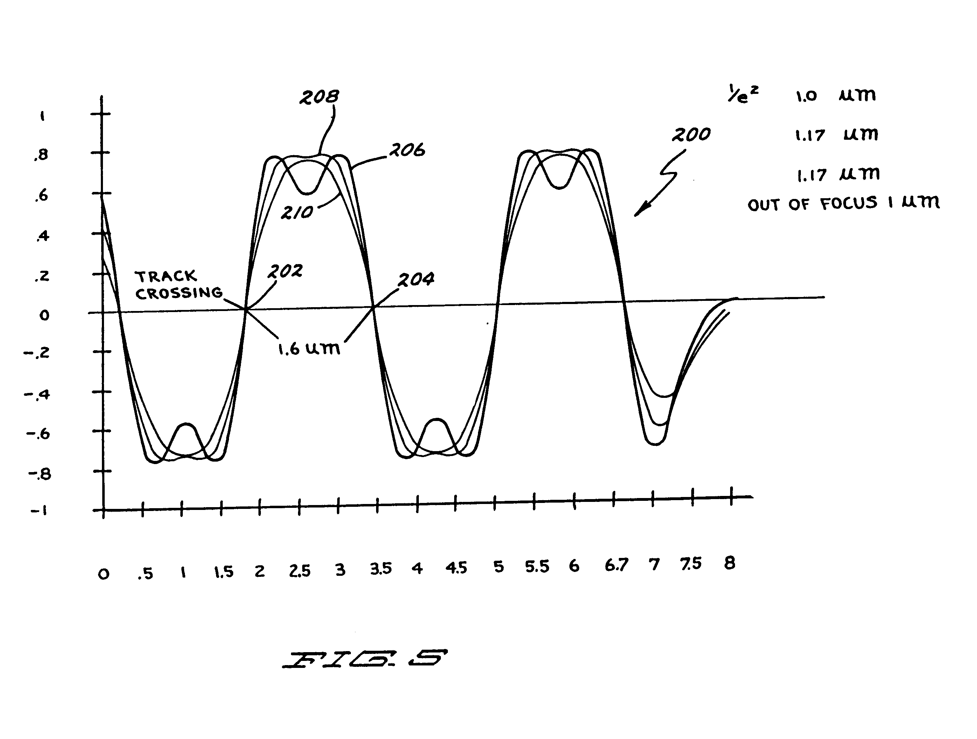

Referring now to Figure 2, there is illustrated a short segment of one information track 12. Each of the concentric information tracks 12 has a plurality of pre-written, pre-formatted optical detectable offset marks or clock locations, shown symbolically, as locations 14 and 16. These clock locations are shown as lying on a track 12 in Figure 2, which is provided only for explanatory purposes. The locations are, according to the invention, off-set on either side of the centre line of the track, as is evident from Figure 4. Each information track 12 has the various clock locations prewritten at equispaced intervals. As shown by the scale in Figure 2, the clock locations in this embodiment are spaced apart by a distance that may be subdivided into 8 smaller intervals. According to a preferred embodiment of the invention, data may be written, using the principles of the optical recording technology, by writing a single location at one of three predetermined possible locations between the clock locations 14, 16. One of three predetermined code word locations is at a location 18, representing 4 on the subdivision scale and exactly between the clock locations 14, 16. The other two locations for writing code words are at a location 20, midway on the scale between 2 and 3 and at a location 22, midway on the scale between 5 and 6. It is possible that the predetermined number of possible code word locations is 3, the code word locations would be at exactly, 2, 4 and 6 on the scale. Further there may be more than 3 possible code word locations between clock locations. The number of possible code word locations would be related to the binary number system in a logical way. Thus, between two clock locations there may be no code word written at all or only one code word written in one location. Depending on the location of the code word which is written, different meanings are assigned. The most significant bit can be at either end of the interval between clock locations depending upon the embodiment. The illustrated embodiment of the present invention does not contemplate writing more than one code word between clock locations, although it may be possible to do so.

Figure 3 shows modulation code and binary values assigned thereto in two alternative formats. In the modulation code column, the symbols represent the presence or absence of a data bit at a location represented by 0's and 1's equivalent to the three code word locations existing between the clock locations as shown in Figure 2. The binary values shown in the binary column represent the binary values assigned to particular modulation codes. It is significant that the absence of any writing between the clock locations does represent a binary value. That is because the duty cycle of a write laser in an optical recording system is a critical factor and, therefore, any factor which improves the duty cycle is important. Thus, the absence of a written item between clock locations helps the laser duty cycle.

Figure 4 shows symbolically the derivation of track crossing information. The left-to-right direction of Figure 4 represents the radial direction of the record carrier 10. The vertical direction on Figure 4 represents the tangential direction with respect to individual information tracks 12. Thus, traversing the record carrier, radially, a plurality of prewritten clock locations 40, 42, 44, 46, 48, 50, 52, 54, 56 are found, each associated with a different concentric information track. Similarly, the corresponding clock location for the pairs of clock locations on different concentric information tracks are represented at 66, 68, 70, 72, 74, 76, 78, 80, 82, respectively.

A track centre line may be taken as a line between D and E in the vertical direction with both clock locations 42, 68 written off the centre line, however, in different directions radially. In any event, for a read head of an optical recording system to be crossing tracks in the radial direction, that is in a track crossing mode, a pattern of clock locations, which may be paired as being close together, separated by a space can be identified.

A read signal detecting these clock locations may be represented by a read signal curve 60 having a null at 61 and twin detecting peaks at 62, 64 and another null at 63 representing the pattern of clock locations traversed. Further, because the clock locations 66 to 80 are paired in the opposite pattern another curve 84 is formed having twin detecting peaks at 86,88 and a null at 90 while another pair of detecting peaks at 92, 94 is formed. Because the record carrier is assumed to be rotating at the same time that the reading head is traversing the tracks, a composite signal will be produced while traversing clock locations on various tracks. This composite signal composed of crossing tracks having the clock locations alternated in a pattern as shown will produce a net output read signal curve 96 having flattened peaks at 100, 102, 108 which represents the summation of the curves 60, 84. The flattened peaks at 100, 102, 108 represent the twin detecting peaks of curves 60, 84 as modified by the null value of the offsetting curve. In effect, what is generated is somewhat similar to a square wave and it is possible to count track crossings and numbers of tracks using a wave of the form of the curve 96. Thus, track crossings may be counted using the preformatted clock signals. Data as written according to Figure 3 provides insufficient additional detecting values to interfere significantly with the curve 96 because the data occurs at sufficiently random places on the data tracks and, in effect, represents a noise value which is not seen in the track crossing mode. Thus, there is a minimum interaction of data and track crossing information in a track crossing mode.

In Figure 5 a curve 206 is representative of the curve 96 of Figure 4. It is assumed for the purposes of Figure 5 that concentric tracks 12 are spaced radially apart a distance of 1.6μm. Track crossings are therefore shown on intervals at 202 and 204 for the curve shown generally at 200. The curve 200 consists of three separate components which represent curves 208, 210 added together to form a net resulting curve 206 representative of the track crossing signal as detected.

It is anticipated that, where a record carrier might be rotating at about 8 to 10 revolutions per second and where the track crossing rate might be in the range of 25 to 40 cm/sec., several clock locations will pass under the read head during the time that the read head is crossing each information track. Thus, the track crossing information signal would read several clock locations per track during the crossing movement, all of which would be averaged using appropriate electronic circuitry having the appropriate time constant to average this track crossing information. Also as a result of this track crossing rate, the clock locations need not be alternated at each clock location but many clock locations may be written on each side of the centre of the information track before switching to the other side and still achieve the desired average track crossing signal which represents an approximation of a square or pulse wave which provides track crossing information as well as track count information. Using clock locations spaced apart by approximately 2 $\mu$m with adjacent information tracks spaced apart approximately 1.6 $\mu$m, it is possible to obtain approximately 1,000 M bytes capacity on a 30 cm record carrier where an appropriate data rate may be obtained with approximately 8 revolutions per second. Looking at this another way, track density may be on the order of 6000 to 8000 information tracks per cm (15,000 to 20,000 information tracks per inch).

Clocking information is provided for control of an optical recording system during both the data write and data read cycles. The record carrier may be provided with clock locations already indicated thereon for a data recording system. For a data reading system, only, both data and clock locations may be prewritten. Using clock locations in an appropriate pattern displaced from track centres to create a track crossing signal, tracking information for tracking servo and track addressing may be obtained. The track crossing information may be used for coarse positioning of a read and write head with a reasonable access time.

In a data write operation, the amount and duration of time that a write laser beam must be activated represents the laser duty cycle. The duty cycle using preformatted clock locations is advantageous because the duty cycle is sufficiently short so as to prolong laser lifetime. Reliability is comparatively high because the ratio of data bits per clock cycle is sufficiently low. In systems relying on a high number of data bits per clock cycle, the reliability tends to decrease. Similarly, there is comparatively little signal interaction of the data and tracking information using the preformatted clock locations in the track crossing mode. In some systems, interference between the tracking signal and the data or information signal can be a problem.

The record carrier according to the present invention and described above does not make use of a frequency distinguishable signal for presentation of data information as described in U.S. Patent Specification No. 4 238 843 referred to above. Instead, the present invention provides a preformatted modulation scheme, using concentric information tracks, for all information including sector, address and data information which may be written using the preformatted clock locations. In addition, the clock locations on the concentric information tracks are varied in a predetermined fashion to be on one side or the other side of the centre of the track so that track crossing information can be obtained as a result of detecting different signals resulting from adjacent tracks.

## Claims

1. A disc shaped record carrier for an optical recording system, having a plurality of information tracks (12) having radially aligned clock synchronisation areas comprising marks, said clock synchronisation areas alternating with data areas, the tracks being provided with prerecorded information patterns arranged along a track centre line, characterized in that the synchronisation areas comprise offset marks having a first radial offset to one side of the track centre line or a second radial offset to the other side of the track centre line, offset marks (40,44,48,52,56'42,46,50,54) with the first offset are alternating with offset marks (66,70,74,82;68,62,76,80) with the second offset along the track centre line.

2. A carrier as claimed in Claim 1, wherein the tracks (12) are concentric.

3. A carrier as claimed in Claim 1 or 2, wherein the preformatted offset marks lie within guards bands between tracks.

4. A carrier as claimed in Claim 1, 2 or 3, wherein the direction of the offset of the offset marks alternate radially so that offset marks of adjacent marks are disposed in pairs (42,44;46,48;50,52;54,56;66,68;70,72;74,76;78,-80) close together in the radial direction.

5. A carrier as claimed in any preceding Claims, wherein a plurality of preformatted offset marks offset to one side are followed by a plurality of preformatted offset marks to the other side of the track centre line.

6. A carrier as claimed in any preceding Claim, characterized in that the information written between said two subsequent offset marks represent address information.

7. A carrier as claimed in any preceding Claim, characterized in that the adjacent tracks are spaced apart approximately 1,6 $\mu$m.

8. Method of reading a record carrier as claimed in Claim 1, in which the record carrier is rotated along its axis, the record carrier is read by means of a read head movable in radial direction, a read signal detecting the offset marks is generated, tracking information is obtained on basis of the read signal.

**Revendications**

1. Support d'enregistrement en forme de disque pour un système d'enregistrement optique, comprenant une pluralité de pistes d'information (12) comportant des zones de synchronisation d'horloge alignées radialement qui comprennent des marques, les zones de synchronisation d'horloge alternant avec des zones de données, les pistes étant pourvues de motifs d'enregistrement préenregistrés disposés le long d'un axe central de piste, caractérisé en ce que les zones de synchronisation comprennent des marques décalées présentant un premier décalage radial d'un côté de l'axe central de piste ou un second décalage radial de l'autre côté de l'axe central de piste, les marques décalées (40, 44, 48, 52, 56; 42, 46, 50, 54) présentant le premier décalage alternant avec des marques décalées (66, 70, 74, 78, 82; 68, 72, 76, 80) présentant le second décalage le long de l'axe central de piste.

2. Support suivant la revendication 1, dans lequel les pistes (12) sont concentriques.

3. Support suivant la revendication 1 ou 2, dans lequel les marques décalées préformatées sont situées dans des bandes de garde entre les pistes.

4. Support suivant la revendication 1, 2 ou 3, dans lequel le sens du décalage des marques décalées alterne radialement de sorte que des marques décalées adjacentes sont disposées par paires (42, 44; 46, 48; 50, 52; 54, 56; 66, 68; 70, 72; 74, 76; 78, 80) proches l'une de l'autre dans le sens radial.

5. Support suivant l'une quelconque des revendications précédentes, dans lequel une pluralité de marques décalées préformatées, décalées d'un côté, sont suivies d'une pluralité de marques décalées préformatées, décalées de l'autre côté de l'axe central de piste.

6. Support suivant l'une quelconque des revendications précédentes, caractérisé en ce que l'information inscrite entre deux marques décalées successives représente de l'information d'adresse.

7. Support suivant l'une quelconque des revendications précédentes, caractérisé en ce que les pistes adjacentes sont espacées l'une de l'autre d'environ 1,6 μm.

8. Procédé de lecture d'un support d'enregistrement suivant la revendication 1, dans lequel le support d'enregistrement est entraîné en rotation autour de son axe, ce support d'enregistrement étant lu au moyen d'une tête de lecture mobile dans un sens radial, un signal de lecture détectant les marques décalées est créé, de l'information de suivi de piste étant obtenue sur base du signal de lecture.

**Patentansprüche**

1. Scheibenförmiger Aufzeichnungsträger für ein optisches Aufzeichnungssystem mit einer Anzahl von Informationsspuren (12), die Marken enthaltende radial ausgerichtete Taktsynchronisationsgebiete besitzen, die mit Datengebieten abwechseln, wobei die Spuren mit voraufgezeichneten Informationsmustern entlang einer Spurenmittenlinie versehen sind, dadurch gekennzeichnet, daß die Synchronisationsgebiete Versetzungsmarken mit einer ersten radialen Versetzung nach einer Seite der Spurenmittenlinie oder mit einer zweiten radialen Versetzung nach der anderen Seite der Spurenmittenlinie besitzen, und daß Versetzungsmarken (40, 44, 48, 52, 56'42, 46, 50, 54) mit der ersten Versetzung in Abwechslung mit Versetzungsmarken (66, 70, 74, 82; 68, 76, 80) mit der zweiten Versetzung entlang der Spurenmittenlinie angebracht sind.

2. Träger nach Anspruch 1, worin die Spuren (12) konzentrisch sind.

3. Träger nach Anspruch 1 oder 2, worin die voraufgezeichneten Versetzungsmarken innerhalb von Schutzbändern zwischen Spuren liegen.

4. Träger nach Anspruch 1, 2 oder 3, worin die Versetzungsrichtung der Versetzungsmarken radial derart abwechselt, daß Versetzungsmarken benachbarter Marken nahe beieinander in radialer Richtung paarweise (42,44; 46,48; 50,52; 54,56; 66,68; 70,72; 74,76; 78,80) angeordnet sind.

5. Träger nach einem oder mehreren der vorangehenden Ansprüche, worin einer Anzahl vorformatierter nach einer Seite versetzter Ver-

setzungsmarken eine Anzahl vorformatierter nach der anderen Seite der Spurenmittenlinie versetzter Versetzungsmarken folgen.

6. Träger nach einem oder mehreren der vorangehenden Ansprüche, dadurch gekennzeichnet, daß die zwischen den zwei aufeinanderfolgenden Versetzungsmarken geschriebene Information Adreßinformation darstellt.

7. Träger nach einem oder mehreren der vorangehenden Ansprüche, dadurch gekennzeichnet, daß die benachbarten Spuren ungefähr 1,6 µm auseinanderliegen.

8. Verfahren zum Lesen eines Aufzeichnungsträgers nach Anspruch 1, wobei der Aufzeichnungsträger um seine Achse gedreht und mittels eines in radialer Richtung bewegbaren Lesekopfes gelesen wird, ein die Versetzungsmarken detektierendes Lesesignal erzeugt und die Spurinformation auf der Basis des Lesesignals gewonnen wird.

*FIG. 1*

+ = CODE WORD LOCATIONS

⊕ = PRE FORMATTED CLOCK LOCATIONS

*FIG. 2*

| MODULATION CODE | | BINARY |
|---|---|---|
| 0 0 0   OR   0 0 0 | | 0 0 |
| 0 0 1       1 0 0 | | 0 1 |
| 0 1 0       0 1 0 | | 1 0 |
| 1 0 0       0 0 1 | | 1 1 |

*FIG. 3*

A B C D E F G H I J K L M N O CROSSING TRACKS →

RADIAL DIRECTION →

FIG. 4

8

EP 0 089 734 B1

$\frac{1}{e^2}$ 1.0 μm

1.17 μm

1.17 μm

OUT OF FOCUS 1 μm

208

206

210

200

TRACK
CROSSING

202

204

1.6 μm

*FIG. 5*